# EUROPEAN PATENT SPECIFICATION

(11) **EP 1 193 143 B1**
(45) Date of publication and mention of the grant of the patent: **07.06.2006**
(21) Application number: 01308200.3
(22) Date of filing: 26.09.2001
(51) Int. Cl.: B60R 22/14, B60R 22/02

(54) **Safety device for a vehicle seat belt**
Sicherheitsvorrichtung für einen Fahrzeugsicherheitsgurt
Dispositif de sécurité pour ceinture de sécurité de véhicule

(30) Priority: 29.09.2000 GB 0023842
(43) Date of publication of application: 03.04.2002
(73) Proprietor: Replitoy Limited, Leicester LE3 5DB (GB)
(72) Inventor: Mobbs, Julia Rosemary, Oadby, Leicester (GB)
(74) Representative: Stagg, Diana Christine

(56) References cited:
- EP-A- 0 456 745
- US-A- 4 610 463
- US-A- 5 005 865
- US-A- 5 624 136
- PATENT ABSTRACTS OF JAPAN vol. 013, no. 013 (M-783), 12 January 1989 (1989-01-12) & JP 63 222956 A (IKEDA BUSSAN CO LTD), 16 September 1988 (1988-09-16)

## Description

The present invention relates to a safety device for use with a vehicle seat belt and in particular to such a device for use by a pregnant woman which prevents undue pressure being exerted by the seat against the woman's abdomen in the event, for example, of an emergency braking situation.

A typical vehicle safety belt has three anchor points which are secured, for example by bolts, to the vehicle frame.

For the driver's seat, one fixing point lies to one side of the rear of the seat adjacent the door pillar. One end of the seat belt is secured and anchored to the first fixing point.

A second fixing point lies above the first point and this secured to the door pillar at a height about level with the driver's head. This anchor point includes a reel to which the second end of the seat belt is fastened and upon which the seat belt is wound when not in use. The reel is loaded resiliently so that when not in use the belt is wound fully on the reel where it is held in a stored condition.

The third fixing point lies to the rear of the driver's seat on the opposite side to the first fixing point. The third fixing point includes a releasable clamp which is carried on a stalk, thus making the clamp readily accessible to the driver.

A clasp, which is releasably engageable with the clamp at the third fixing point, is mounted on the seat belt and retained in the area of the second fixing point when the belt is not in use. When the driver wishes to use the seat belt he or she grasps the clasp and draws it together with the belt across his or her body to engage with the releasable clamp. In this way, part of the belt extends across the driver's lap between the first and third fixing points and part diagonally across the driver's upper body between the second and third fixing points.

Clearly, the invention is not restricted to the typical three anchor point fixing described above.

From the prospective of a pregnant women, the lap portion of the belt in particular can cause discomfort, particularly in the latter stages of pregnancy by tending to ride up over the extended abdomen area.

Attempts have been made previously to overcome this difficulty. For example, EP 0 456 745 B describes an arrangement in which the lap portion of the belt is releasably fastened at an additional fixing point provided between the wearer's upper legs (thighs). One disadvantage of this arrangement is that it is restricted in that the woman needs to wear trousers, since the fixing between her upper legs prevents her wearing a dress, especially a long dress. Further, the fixing between the legs is not readily accessible either to clamp onto or release from which may, in itself, deter a woman from using the arrangement.

In accordance with the broadest aspect of the present invention there is provided a safety device for a vehicle fitted with a seat belt having at least a lap portion which, in use, extends across the user's upper legs, characterised in that the safety device comprises two spaced apart guides through each of which the lap portion of the belt extends, the guides being located on respective sides of the user's upper legs.

In accordance with one embodiment of the invention, the device consists of a pad or cushion which, in use, is placed on the vehicle's seat and upon which the user sits, the guides being provided on the pad or cushion.

In accordance with a second embodiment of the invention, the guides are anchored to respective sides of the vehicle seat.

In both embodiments of the invention the guides consist of a sheet of fabric folded in half which is releasably closeable along its free edges by a fastening such as VELCRO (Registered Trade Mark). Each guide may be carried by a pair of support straps which are preferably elasticated. Conveniently, one end of the support straps is sewn to the guide. In the first embodiment of the invention the other end of each support strap is sewn to the pad or cushion at or adjacent a corner of the forward end of the pad or cushion. In the second embodiment of the invention, which does not include a pad or cushion, the other end of the support strap is fastened to a part of the vehicle, for example, to the seat frame.

The invention will now be described further, by way of example, with reference to the accompanying drawings in which:
Figure 1 is a perspective view of a safety device for a vehicle seat belt in accordance with a first embodiment of the invention,
Figure 2 illustrates diagrammatically the safety device of Figure 1 fitted to a vehicle seat,
Figure 3 is a view corresponding to Figure 2 but with a pregnant woman occupying the vehicle seat,
Figure 4 is a perspective view of a second embodiment of the invention, and
Figure 5 is an enlarged view of a belt guide.

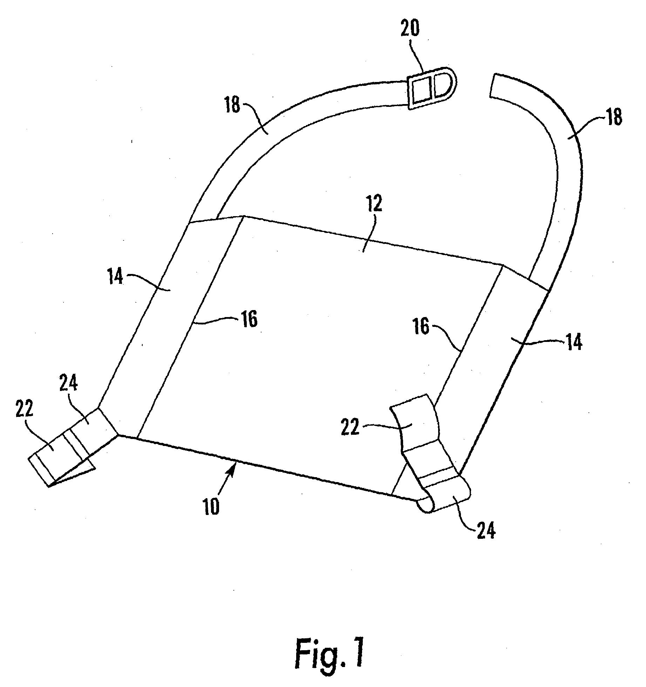

The safety device illustrated in Figure 1 consists of an essentially planar pad or cushion 10 having a central part 12 and two side parts 14, on opposing sides of the central part 12, respectively. The parts 12, 14 are each separated by a line of stitching 16 which, in effect, forms a fold line, thus enabling the two side parts 14 to be inclined relative to the central part 12.

The cushion 10 is dimensioned to fit on to a vehicle seat with the central part 12 lying flat on the seat and with the parts 14 slightly raised, where necessary, to follow any profiling of the seat.

A first end of two belt parts 18 are each stitched to a rear most corner of the cushion 10, and a buckle 20 on the free end of one of the belt parts enables the free ends of the two belt parts to be removably connected together.

A guide 22 is provided at each of the two forward corners of the cushion 10. The guide is a folded-over fabric and is openable to permit a vehicle seat belt to enter the guide 22 and closeable when the vehicle seat belt has been set in position. The guide 22 may be retained in its closed position by a strip of a hook and eye fastener such as that sold under the Registered Trade Mark VELCRO.

Each guide 22 is stitched to the front corner of a side part 14 by two short lengths 24 of elasticated ribbon. Hence, it is easy for a pregnant woman, for example, to manoeuvre the guides 22, as needed, to receive the seat belt.

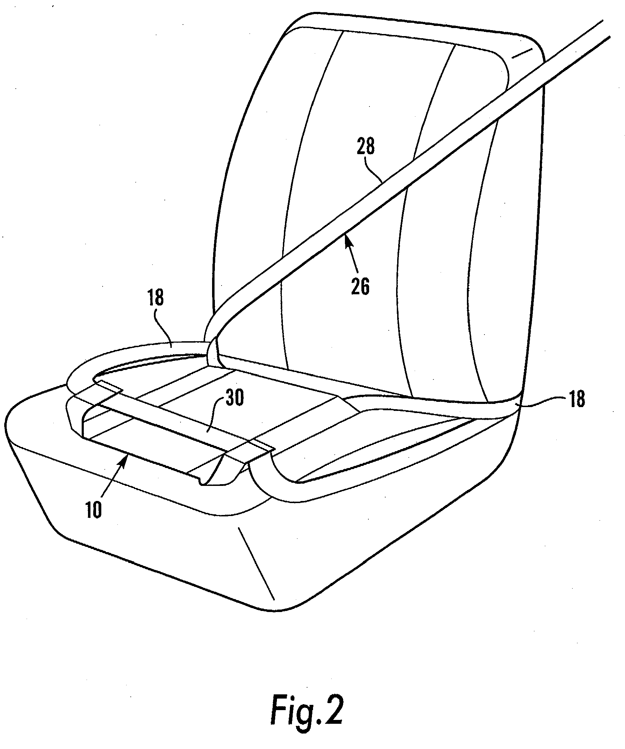

Referring now to Figure 2, the safety device is shown in position in a vehicle for use by a pregnant woman. As can be seen, to use the safety device, the cushion 10 is first placed on a vehicle's seat. The belt ends 18, not visible, are drawn behind the seat back and secured together by the buckle 20. The woman then sits on the cushion 10 and draws the seat belt 26 across her body in the usually manner. The diagonal part 28 of the belt occupies its normal position but the lap part 30 is guided across the woman's upper legs supported between the two guides 22. To achieve this, the woman first opens each guide 22 by tearing along the VELCRO® fasteners. The lap part 30 of the belt is then placed in the guides 22 which are then closed. With the guides 22 in a closed condition, the belt 30 can move freely within the guides 22.

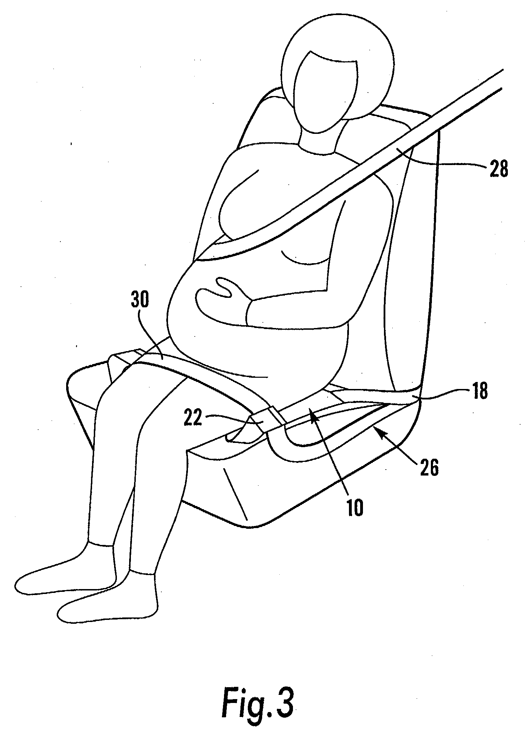

The position of a pregnant woman using the safety device is illustrated in Figure 3.

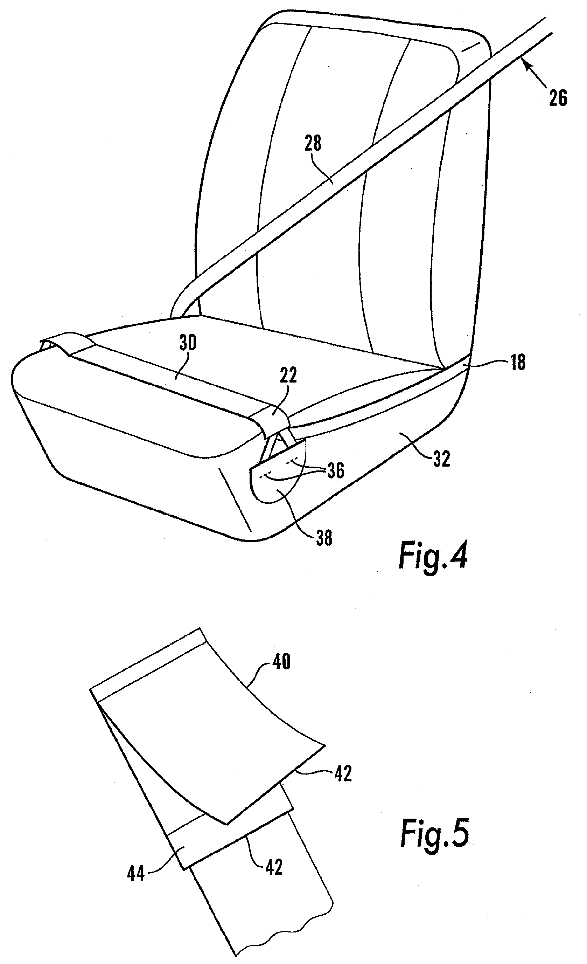

In the second embodiment of the invention shown in Figure 4, opposed sides 32 of a seat base are slit at 36 (shown by dotted lines) and the elasticated ribbons pass through the relevant slit and are tied to the seat frame (not shown). In this embodiment of the invention there is no cushion 10. For convenience and appearance each slit 36 is covered by a pocket 38 into which a guide 22 can be placed when not in use.

A guide, as used in both embodiments of the invention as illustrated in Fig. 5. The guide consists of a sheet of fabric 40 which is folded in half and which is releasably closeable along its free edges 42 by a strip of VELCRO® 44.

## Claims

1. A safety device for a vehicle fitted with a seat belt having at least a lap portion which, in use, extends across the user's upper legs, **characterised in that** the safety device comprises two spaced apart guides (22) through each of which the lap portion of the belt extends, the guides (22) being located on respective sides of the user's upper legs.

2. A safety device according to claim 1, **characterised in that** the safety device consists of a pad or cushion (10) which, in use, is placed on the vehicle's seat and upon which the user sits, the guides (22) being provided on the pad or cushion (10).

3. A safety device according to claim 1, **characterised in that** the guides (22) are anchored to respective sides (32) of the vehicle seat.

4. A safety device according to any of claims 1 to 3, **characterised in that** the guides (22) consist of a sheet of fabric folded in half which is releasably closeable along its free edges by a fastening.

5. A safety device according to claim 4, **characterised in that** the fastening is a hook and eye fastener such as VELCRO (Registered Trade Mark).

6. A safety device according to any of claims 1 to 5, **characterised in that** each guide (22) is carried by a pair of support straps (24).

7. A safety device according to claim 6, **characterised in that** the support straps (24) are elasticated.

8. A safety device according to claim 6 or claim 7, **characterised in that** one end of the support straps (24) is sewn to the guide (22).

9. A safety device according to claim 8 when dependant upon claim 2, **characterised in that** the other end of each support strap (22) is sewn to the pad or cushion (10) at or adjacent a corner of the forward end of the pad or cushion (10).

10. A safety device according to claim 6 when dependant upon claim 3, **characterised in that** one end of the support strap (24) is fastened to a part of the vehicle.

11. A safety device according to claim 10, **characterised in that** said one end of the support strap (24) is fastened to the seat frame.

## Patentansprüche

1. Sicherheitsvorrichtung für ein Fahrzeug, dass mit einem Sicherheitsgurt ausgestattet ist, der mindestens einen Schoßteil hat, der sich im Gebrauch über die Oberschenkel des Benutzers erstreckt, **dadurch gekennzeichnet, dass** die Sicherheitsvorrichtung zwei in einem Abstand voneinander angeordnete Führungen (22) umfasst, durch die sich jeweils der Schoßteil des Gurts erstreckt, wobei sich die Führungen (22) auf den jeweiligen Seiten der Oberschenkel des Benutzers befinden.

2. Sicherheitsvorrichtung nach Anspruch 1, **dadurch gekennzeichnet, dass** die Sicherheitsvorrichtung aus einem Polster oder Kissen (10) besteht, das im Gebrauch auf den Fahrzeugsitz platziert wird und auf dem der Benutzer sitzt, wobei die Führungen (22) an dem Polster oder Kissen (10) bereitgestellt werden.

3. Sicherheitsvorrichtung nach Anspruch 1, **dadurch gekennzeichnet, dass** die Führungen (22) an den jeweiligen Seiten (32) des Fahrzeugssitzes verankert sind.

4. Sicherheitsvorrichtung nach einem der Ansprüche 1 bis 3, **dadurch gekennzeichnet, dass** die Führungen (22) aus einem in der Mitte in zwei gefalteten Stück Stoff bestehen, dass durch einen Verschluss entlang seiner freien Ränder lösbar verschlicßbar ist.

5. Sicherheitsvorrichtung nach Anspruch 4, **dadurch gekennzeichnet, dass** es sich bei dem Verschluss um einen Klettverschluss wie VELCRO (eingetragenes Warenzeichen) handelt.

6. Sicherheitsvorrichtung nach einem der Ansprüche 1 bis 5, **dadurch gekennzeichnet, dass** jede Führung (22) von einem Paar Halteriemen getragen wird.

7. Sicherheitsvorrichtung nach Anspruch 6, **dadurch gekennzeichnet, dass** die Halteriemen (24) elastisch sind.

8. Sicherheitsvorrichtung nach Anspruch 6 oder 7, **dadurch gekennzeichnet, dass** ein Ende der Halteriemen (24) an die Führung (22) genäht ist.

9. Sicherheitsvorrichtung nach Anspruch 8 wenn abhängig von Anspruch 2, **dadurch gekennzeichnet, dass** das andere Ende jedes Halteriemens (22) an einer oder angrenzend an eine Ecke des vorderen Ende des Polsters oder Kissens (10) an das Polster oder Kissen (10) angenäht ist.

10. Sicherheitsvorrichtung nach Anspruch 6 wenn abhängig von Anspruch 3, **dadurch gekennzeichnet, dass** ein Ende des Halteriemens (24) an einem Teil des Fahrzeugs befestigt ist.

11. Sicherheitsvorrichtung nach Anspruch 10, **dadurch gekennzeichnet, dass** ein Ende des Halteriemens (24) am Sitzrahmen befestigt ist.

## Revendications

1. Dispositif de sécurité pour un véhicule équipé d'une ceinture de sécurité possédant au moins une portion horizontale qui, lors de son utilisation, s'étend en travers de la partie supérieure des jambes de l'utilisateur, **caractérisé en ce que** le dispositif de sécurité comprend deux guides espacés (22) à travers lesquels passe la portion horizontale de la ceinture, les guides (22) étant situés sur les côtés respectifs de la partie supérieure des jambes de l'utilisateur.

2. Dispositif de sécurité selon la revendication 1, **caractérisé en ce que** le dispositif de sécurité comprend une plateforme ou un coussin (10) qui, lors de son utilisation, est placée sur le siège de véhicule et sur laquelle l'utilisateur s'assoit, les guides (22) étant prévus sur la plateforme ou le coussin (10).

3. Dispositif de sécurité selon la revendication 1, **caractérisé en ce que** les guides (22) sont ancrés sur les côtés respectifs (32) du siège de véhicule.

4. Dispositif de sécurité selon l'une quelconque des revendications 1 à 3, **caractérisé en ce que** les guides (22) se composent d'une pièce de tissu pliée en deux qui peut se fermer d'une manière libérable le long de ses bords libres par un système de fixation.

5. Dispositif de sécurité selon la revendication 4, **caractérisé en ce que** le système de fixation est une attache à agrafe et porte du type VELCRO (marque de fabrique déposée).

6. Dispositif de sécurité selon l'une quelconque des revendications 1 à 5, **caractérisé en ce que** chaque guide (22) est porté par une paire de pattes de support (24).

7. Dispositif de sécurité selon la revendication 6, **caractérisé en ce que** les pattes de support (24) sont élastiquées.

8. Dispositif de sécurité selon la revendication 6 ou la revendication 7, **caractérisé en ce qu'**une extrémité des pattes de support (24) est cousue au guide (22).

9. Dispositif de sécurité selon la revendication 8 quand elle dépend de la revendication 2, **caractérisé en ce que** l'autre extrémité de chaque patte de support (22) est cousue à la plateforme ou au coussin (10) au niveau d'un coin ou à côté d'un coin de l'extrémité située en avant de la plateforme ou du coussin (10).

10. Dispositif de sécurité selon la revendication 6 quand elle dépend de la revendication 3, **caractérisé en ce qu'**une extrémité de la patte de support (24) est fixée à une partie du véhicule.

11. Dispositif de sécurité selon la revendication 10, **caractérisé en ce que** ladite une extrémité de la patte de support (24) est fixée à l'armature de siège.
